# EUROPÄISCHE PATENTANMELDUNG

(11) **EP 2 641 720 A1**
(43) Veröffentlichungstag der Anmeldung: **25.09.2013**
(21) Anmeldenummer: 12160372.4
(22) Anmeldetag: 20.03.2012
(51) Int. Cl.: B29C 47/06, B29C 44/24, E06B 3/267, B29C 47/82, B29C 47/30

(54) **Verfahren und Kunststoff-Extrusionsvorrichtung zur Herstellung eines mit Dämmstoff ausgeschäumten Hohlkörpers oder Hohlraums**

(71) Anmelder: Sika Technology AG, 6340 Baar (CH)
(72) Erfinder: Ackermann, Herbert, 8632 Tann (CH); Brunner, Andreas, 8197 Rafz (CH); Hoefflin, Frank, 5400 Baden (CH)
(74) Vertreter: Sika Patent Attorneys

(57) **Zusammenfassung**

Die Erfindung betrifft ein Verfahren und eine Kunststoff-Extrusionsvorrichtung zur Herstellung eines mit Dämmstoff (2) ausgeschäumten Hohlkörpers (1) oder Hohlraums (1a), wobei ein expandierbares Ausgangsmaterial (11) des Dämmstoffs (2) einer Kunststoff-Extrusionsvorrichtung (13) zugeführt, in dieser unter Druck aktiviert und beim Austrag aus dieser in den Hohlkörper (1) oder den Hohlraum (1a) mit derart hohem Volumenausdehnungsgradienten expandiert wird, dass der durch die Expansion gebildete Dämmstoff (2) den Querschnitt des Hohlkörpers (1) oder Hohlraums (1a) beim Eintritt unverzögert vollständig ausfüllt.

## Beschreibung

### Technisches Gebiet

Die Erfindung betrifft ein Verfahren zur Herstellung eines mit Dämmstoff ausgeschäumten Hohlkörpers oder Hohlraums, insbesondere eines aus Kunststoffmaterial extrudierten Profils, sowie eine Kunststoff-Extrusionsvorrichtung zur Durchführung dieses Verfahrens.

### Stand der Technik

In den verschiedensten Gebieten der Technik ist seit langem die Dämmung - sowohl Wärmedämmung als auch akustische Dämmung - von Hohlräumen oder Hohlkörpern mit Schaumstoffen bekannt. Grundsätzlich kann man den Schaumstoff dabei, in Abhängigkeit von der geometrischen Konfiguration des zu dämmenden Hohlraums oder Hohlkörpers sowie den Verarbeitungseigenschaften des eingesetzten Materials, als separat vorgefertigtes Teil in den Hohlraum oder Hohlkörper einsetzen oder in einem nicht-expandierten Ausgangszustand am Applikationsort einbringen und dort zur Expansion bringen, insbesondere aufschäumen.

Beide grundsätzlichen Vorgehensweisen sind auch für die Herstellung von mit Dämmstoff ausgefüllten Fenster- oder Türprofilen bekannt geworden: Entweder fertigt man aus dem entsprechenden Dämmstoff ein eigenständiges Profil und führt dieses in das vorgefertigte Rahmenprofil ein, oder man spritzt Ausgangsmaterial in das Rahmenprofil ein und lässt es nach einer entsprechenden Aktivierung dort expandieren. Ein Verfahren der letzteren Art ist etwa Gegenstand der WO 2009/062986 A1 der Anmelderin. Darin wird insbesondere auch vorgeschlagen, das expandierbare Ausgangsmaterial zur Bildung des das Profil aushüllenden Dämmstoffs durch die Abwärme des praktisch gleichzeitig extrudierten Kunststoff-Rahmenprofils zu aktivieren.

Insbesondere aus der Perspektive eines Herstellers von Fenstern oder Türen haben beide grundsätzlichen Lösungen gewisse Nachteile; insbesondere sind dies bei der ersten Variante Nachteile logistischer Art und bei der zweiten Variante der Nachteil, anspruchsvolle Verfahren der Kunststofftechnologie im eigenen Betrieb ausführen und das entsprechende Equipment vorhalten zu müssen.

### Offenbarung der Erfindung

Der Erfindung liegt die Aufgabe zugrunde, ein insbesondere aus dem Blickwinkel des Anwenders bzw. Weiterverarbeiters verbessertes Verfahren zur Herstellung eines mit Dämmstoff ausgeschäumten Hohlkörpers oder Hohlraums, insbesondere eines aus einem Kunststoffmaterial extrudierten Profils, bereitzustellen. Des Weiteren soll eine Vorrichtung zur Durchführung dieses Verfahrens bereitgestellt werden.

Diese Aufgabe wird in ihrem Verfahrensaspekt durch ein Verfahren mit den Merkmalen des Anspruchs 1 und in ihrem Vorrichtungsaspekt durch eine Kunststoff-Extrusionsvorrichtung mit den Merkmalen des Anspruchs 9 gelöst. Zweckmäßige Fortbildungen des Erfindungsgedankens sind Gegenstand der jeweiligen abhängigen Ansprüche.

Die Erfindung wendet sich von beiden oben skizzierten grundsätzlichen Vorgehensweisen ab und schließt die Überlegung ein, gewissermaßen eine Synthese aus beiden zu finden. Des Weiteren schließt sie den Gedanken ein, dies durch eine Aktivierung des Ausgangsmaterials des Dämmstoffs bereits in einer zum Applizieren desselben benutzten Vorrichtung vorzunehmen und zum anderen den Ausgang dieser Vorrichtung derart zu gestalten, dass das aktivierte Ausgangsmaterial unmittelbar dort - und nicht erst mit Verzögerung gegenüber dem Zeitpunkt der Applikation - im Hohlraum oder Hohlkörper expandiert wird. Es trifft also gewissermaßen der bereits expandierte Dämmstoff auf den vorgefertigten Hohlkörper oder den vorhandenen Hohlraum, ohne dass er vorher an anderer Stelle als selbständiger Körper existiert hätte und zu handhaben gewesen wäre.

Dies ermöglicht es, ausgeschäumte Hohlkörper oder Hohlräume unter effizienter Auslastung von Großserientechnik und ohne zwischengeschaltete Handhabungs- und Lagervorgänge separater Teile bereitzustellen. Dies wiederum ermöglicht erhebliche Produktionsvereinfachungen und Kosteneinsparungen insbesondere beim Weiterverarbeiter von entsprechend hergestellten Profilen und bietet somit andererseits dem Profilhersteller die Möglichkeit, diese Anwendervorteile zur Gewinnung von Marktanteilen zu nutzen und/oder die bei ihm selbst stattfindende höhere Wertschöpfung in seiner Preisgestaltung zu berücksichtigen. Im Übrigen ermöglicht der vorgeschlagene Herstellungsprozess eine hochstehende und einheitliche Prozess- und Qualitätskontrolle bei der Herstellung gedämmter Hohlkörper, insbesondere gedämmter Rahmenprofile, und führt damit zu einer für den Endverbraucher verlässlichen Produktqualität.

In einer Ausführung des erfindungsgemäßen Verfahrens ist vorgesehen, dass der Kunststoff-Extrusionsvorrichtung in Art eines Extruders oder einer Spritzgießmaschine festes Ausgangsmaterial in Granulatform zugeführt wird. Festes, granulares Ausgangsmaterial lässt sich leicht und kostengünstig konfektionieren, lagern und restarm verarbeiten und bietet somit erhebliche Vorteile gegenüber flüssigen oder pastösen Formulierungen.

In einer aus aktueller Sicht unter Umweltschutzaspekten und wirtschaftlich besonders wichtigen Ausgestaltung ist der Hohlkörper ein aus einem Kunststoffmaterial extrudiertes Profil, und der Dämmstoff wird in einem Koextrusionsprozess zugleich mit der Bildung des Kunststoffprofils in dieses eingebracht. Grundsätzlich ist die Erfindung aber auch mit stranggepressten Metallprofilen für Fenster- und Türrahmen und darüber hinaus bei andersartigen Produkten einsetzbar, etwa zur in-situ-Abdichtung von Fugen oder Dämmung von Hohlräumen in Baukörpern oder zur Fugenabdichtung und Dämmung von Profilen oder anderen Hohlräumen im Fahrzeug-, Flugzeug- und Schiffbau.

In einer weiteren Ausführung der Erfindung ist vorgesehen, dass eine Kunststoff-Extrusionsvorrichtung mit mindestens einer Förderschnecke eingesetzt wird und die Kunststoff-Extrusionsvorrichtung derart konfiguriert ist sowie die mechanischen Eigenschaften des Ausgangsmaterials derart vorbestimmt sind, dass hohe Drücke und/oder Scherkräfte auftreten, die zu einer thermischen Aktivierung des Ausgangsmaterial mindestens beitragen. Bei dieser Ausgestaltung kann man u. U. ohne zusätzliche Heizeinrichtung der Kunststoff-Extrusionsvorrichtung auskommen und besonders energiesparend arbeiten. In einer anderen Ausgestaltung wird eine Kunststoff-Extrusionsvorrichtung mit einer Heizeinrichtung eingesetzt und die Heizeinrichtung derart betrieben, dass sie zu einer thermischen Aktivierung des Ausgangsmaterials mindestens beiträgt. Auch eine Kombination beider Wege zur Aktivierung des Ausgangsmaterials ist möglich.

In einer weiteren Ausführung der Erfindung wird der Expansionsvorgang des Ausgangsmaterials beim Austrag aus der Kunststoff-Extrusionsvorrichtung durch eine spezielle Düsengeometrie, insbesondere in einem ausgangsseitig angefügten Zusatzteil der Kunststoff-Extrusionsvorrichtung, gesteuert. Applikationsangepasste und auf den speziellen Dämmstoff (bzw. dessen Ausgangsmaterials) zugeschnittene Düsengeometrien ermöglichen eine präzise Steuerung des Expansionsvorganges, und die Realisierung in einem Zusatzteil zur eigentlichen Spritzvorrichtung erlaubt die Vorhaltung verschiedener angepasster Düsengeometrien und die schnelle und kostengünstige Änderung bei Produktionsumstellungen, sei es durch Einsatz eines anderen Dämmstoffes oder anderer Profilgeometrien etc.

In einer speziellen Ausgestaltung wird durch die Düsengeometrie zunächst eine graduelle Querschnittsverringerung mit kleinem Gradienten über eine große Länge, dann ein Konstanthalten des Querschnitts über eine kleine Länge, dann eine graduelle Querschnittsverringerung mit großem Gradienten über eine kleine Länge, anschließend eine graduelle Querschnittsvergrößerung mit mittlerem Gradienten über eine mittlere Länge und schließlich ein Austritt durch einen Sprühkopf mit einer Mehrzahl von Sprühöffnungen realisiert. Diese Abschnitts-Unterteilung der Düse ist eine aus aktueller Sicht vorteilhafte Realisierung, es ist aber darauf hinzuweisen, dass nicht notwendigerweise alle genannten Abschnitte mit den jeweils genannten Phasen mit den jeweils zugeordneten geometrischen Charakteristiker vorliegen müssen.

Vorrichtungsaspekte der Erfindung ergeben sich weitgehend unmittelbar aus den obern erläuterten Verfahrensaspekten und werden insoweit hier nicht nochmals ausführlich erläutert. Es wird jedoch auf folgendes hingewiesen:
Die vorgeschlagene Kunststoff-Extrusionsvorrichtung ist in einer vorteilhaften Ausführung mit einer ausgangsseitigen Düsenanordnung, die zur Expansion eines vor-aktivierten Ausgangsmaterials mit hohem Volumenausdehnungsgradienten geeignet ist, ausgebildet. Obgleich grundsätzlich die Expansion des vor-aktivierten Ausgangsmaterials jenseits des Ausgangs des Kunststoff-Extrusionsvorrichtung geschehen kann - begrenzt etwa durch die Wandungen des Hohlkörpers oder Hohlraums, in den das Material expandiert -, ist aus aktueller Sicht das Vorsehen von Mitteln zu einer mindestens die Anfangsphase betreffenden Steuerung des Expansionsschrittes innerhalb der Spritzvorrichtung bzw. (wie oben bereits erwähnt) in einem Zusatzteil zu dieser als sinnvoll anzusehen.

Ausgangsseitig der Kunststoff-Extrusionsvorrichtung kann zur geeigneten Verteilung und/oder Formung des expandierenden Materialstroms eine Lochplatte oder auch ein Gitter oder Netz vorgesehen sein, und über ein spezielle Querschnittsgestalt der Düse - etwa mit erweiterten Eckbereichen und/oder einem Düsenkern - kann erreicht werden, dass auch die Eckbereiche kantiger und verwinkelt geformter Profile weitgehend mit Dämmstoff ausgefüllt werden.

### Beschreibung der Zeichnungen

Vorteile und Zweckmäßigkeiten der Erfindung ergeben sich im Übrigen aus der nachfolgenden Beschreibung von Ausführungsbeispielen und -aspekten, teilweise anhand der Figuren. Von diesen zeigen:
- Fig. 1: eine schematische Darstellung zur Erläuterung einer Ausführungsform des erfindungsgemäßen Verfahrens, in Art einer Längsschnittdarstellung durch eine Koextrusions-Anordnung,
- Fig. 2: skizzenartige Querschnittsdarstellungen einer einfachen Profilgeometrie und von Düsenquerschnitten einer Kunststoff-Extrusionsvorrichtung gemäß Ausführungen der Erfindung,
- Fig. 3A und 3B: schematische Darstellungen (Längsschnittdarstellung) mit grafischer Darstellung eines zugehörigen Druckverlaufes (Fig. 3A) und Querschnittsdarstellungen längs einer Schnittebene in Fig. 3A (Fig. 3B) zur Erläuterung einer weiteren Ausführung der Erfindung,
- Fig. 4A und 4B: schematische Darstellungen (Längsschnittdarstellung) mit grafischer Darstellung eines zugehörigen Druckverlaufes (Fig. 4A) und Querschnittsdarstellungen längs einer Schnittebene in Fig. 4A (Fig. 4B) zur Erläuterung einer weiteren Ausführung der Erfindung,
- Fig. 5A und 5B: schematische Darstellungen (Längsschnittdarstellung) mit grafischer Darstellung eines zugehörigen Druckverlaufes (Fig. 5A) und Querschnittsdarstellungen längs einer Schnittebene in Fig. 5A (Fig. 5B) zur Erläuterung einer weiteren Ausführung der Erfindung,
- Fig. 6A und 6B: eine Querschnittsdarstellung bzw. Draufsicht auf ein Zusatzteil einer Kunststoff-Extrusionsvorrichtung gemäß einer weiteren Ausführung der Erfindung und
- Fig. 7A und 7B: eine Längsschnittdarstellung bzw. perspektivische Ansicht eines Zusatzteils einer Kunststoff-Extrusionsvorrichtung gemäß einer weiteren Ausführung der Erfindung.

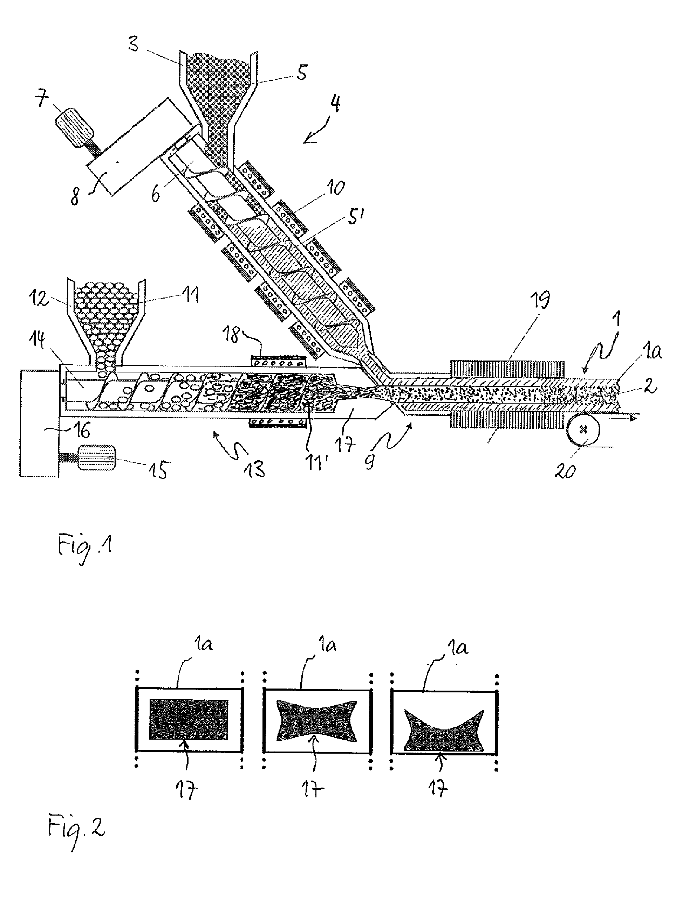

In Figur 1 ist ein erfindungsgemäßes Koextrusions-Verfahren zur Herstellung von Kunststoffprofilen 1 mit einem geschäumten Dämm-Kern 2 schematisch dargestellt.

Dabei wird der Trichter 3 eines ersten Extruders 4 mit einem festen, thermoplastisch verarbeitbaren Kunststoff 5 gefüllt. Dieser Kunststoff kann in beliebiger Form vorliegen. Insbesondere liegt der Kunststoff als Granulat oder als Pulver vor. Der Kunststoff wird vorzugsweise bei einer Temperatur von 150 °C bis 350 °C, insbesondere von 170 °C bis 260 °C, bevorzugt von 180 °C bis 220 °C, extrudiert. Der Kunststoff 5 gelangt durch den Trichter 3 in das Innere des ersten Extruders 4. Hier wird der Kunststoff mittels einer Förderschnecke 6, welche durch einen Motor 7 über ein Getriebe 8 betrieben wird, in Richtung einer Düse 9 gefördert und gleichzeitig durch Heizelemente 10, welche am ersten Extruder angebracht sind, von außen auf eine Temperatur über seinen Schmelzpunkt beheizt, wodurch der Kunststoff schmilzt. Der aufgeschmolzene Kunststoff 5' wird durch die Düse 9, welche die Querschnittsgestalt des herzustellenden Profils aufweist, gepresst.

Parallel dazu wird schäumbares Material 11, insbesondere in Form von Granulat, in den Trichter 12 eines zweiten Extruders 13 gefüllt und gelangt dann über diesen ins Innere des zweiten Extruders. Das schäumbare Material wird mittels einer Förderschnecke 14, welche durch einen Motor 15 über ein Getriebe 16 betrieben wird, in Richtung einer Düse 17 gefördert. Durch eine geeignete geometrische Konfiguration der Schnecke und des Schneckenzylinders werden dabei gezielt hohe Drücke und Scherkräfte erzeugt, die zu einem Erweichen und einer Aktivierung des ursprünglich festen Granulats führen, und eine zusätzliche vorgesehene Heizeinrichtung 18 unterstützt diesen Vorgang.

An der Düse 17 wird das aktivierte schäumbare Material 11' unter nahezu schlagartiger Expansion, die durch eine spezielle geometrische Konfiguration der Düse gesteuert wird, in den Hohlraum des Kunststoffhohlprofils 1a koextrudiert, wo es mit den Innenwänden des Kunststoffholprofils in Berührung kommt. Das Einführen des Kunststoffprofils 1 in eine Kalibriereinrichtung 19 soll dabei gewährleisten, dass das Kunststoffhohlprofil bis zum Erstarren des Kunststoffs nicht durch den Druck des eingeschäumten Materials verformt wird, sondern seine vorgegebene Querschnittsgestalt beibehält.

Nach der Kalibriereinrichtung 19 durchläuft das Kunststoffprofil 1 gegebenenfalls eine separate Kühleinrichtung, wobei es beispielsweise in ein Wasserbad gelangt oder von Wasserduschen besprüht wird. Am Ende des Koextrusions-Verfahrens wird über eine Abzugseinrichtung 20 das Kunststoffprofil 1 bei einer konstanten, an die Förderleistung der Extruder angepassten, Geschwindigkeit, abgezogen.

Nachfolgend werden unter Bezugnahme auf die Figuren 2 - 7B Ausführungsbeispiele und -aspekte des erfindungsgemäßen Verfahrens und einer hierzu einsetzbaren Kunststoff-Extrusionsvorrichtung erläutert. Soweit sinnvoll, wird hierbei auf in Fig. 1 gezeigte Teile Bezug genommen, und diese werden mit den Bezugsziffern gemäß Fig. 1 oder hieran angelehnten Bezugsziffern bezeichnet.

Fig.2 zeigt in drei schematischen Querschnittsdarstellungen jeweils die Wandung 1a eines im Querschnitt rechteckigen Kunststoffprofils mit Beispielen von Querschnittsformen eines formprägenden Abschnitts der Düse 17 des zweiten Extruders nach Fig. 1. In der linken Darstellung korrespondiert die Querschnittsgestalt der Düse 17 mit derjenigen des Profils. Um eine verbesserte Füllung eines derartigen Profils in den Eckbereichen zu erreichen, werden Modifikationen der Querschnittsgestalt der Düse vorgeschlagen, die aus der mittleren und rechten Darstellung ersichtlich sind. Beiden gemeinsam ist ein Einzug der Düsenform in den Mittenbereichen der Begrenzungsflächen oder, anders gesagt, eine schmetterlingsartige Aufweitung zu den Eckbereichen hin.

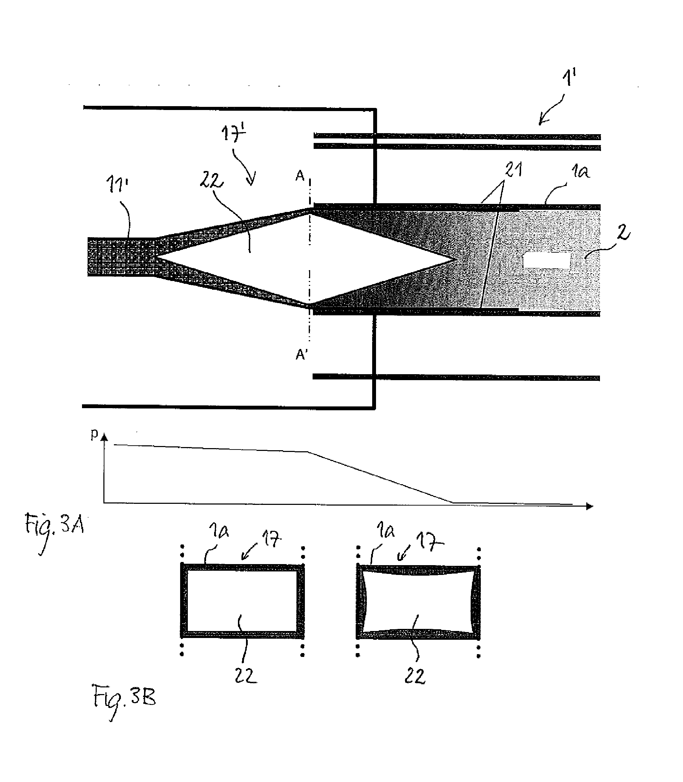

Fig. 3A und 3B zeigen beispielhafte Geometrien einer Austragdüse 17 in schematischer Längs- bzw. Querschnittsdarstellung zusammen mit einem in mehrere Kammern untergliederten Kunststoffprofil 1' mit einem Dämmkern 2 in einer Kammer. Am Ausgang der Düse sind hier zusätzlich Stahl-Leitbleche 21 zur seitlichen Begrenzung des expandierenden Dämmstoffs auch nach Verlassen der Düse und zur Verminderung seines Anhaftens an die Profilwandung vorgesehen. In der Düse selbst ist ein Düsen- bzw. Spritzkern (Mandrel) 22 zur Vorprägung der Gestalt vorgesehen, in der das aktivierte Ausgangsmaterial 11' zum fertigen Dämmstoff 2 expandiert. In Fig. 3A ist zu erkennen, dass der Düsenkern 22 in Längserstreckung doppelt-konisch geformt ist, und Fig. 3B zeigt, als Querschnittsdarstellung längs der Schnittebene A' in Fig. 3A, zwei verschiedene Querschnittsformen (in Anlehnung an die linke und mittlere Variante in Fig. 2). Die grafische Darstellung im unteren Teil von Fig. 3A zeigt den Druckverlauf am Ausgang der Kunststoff-Extrusionsvorrichtung.

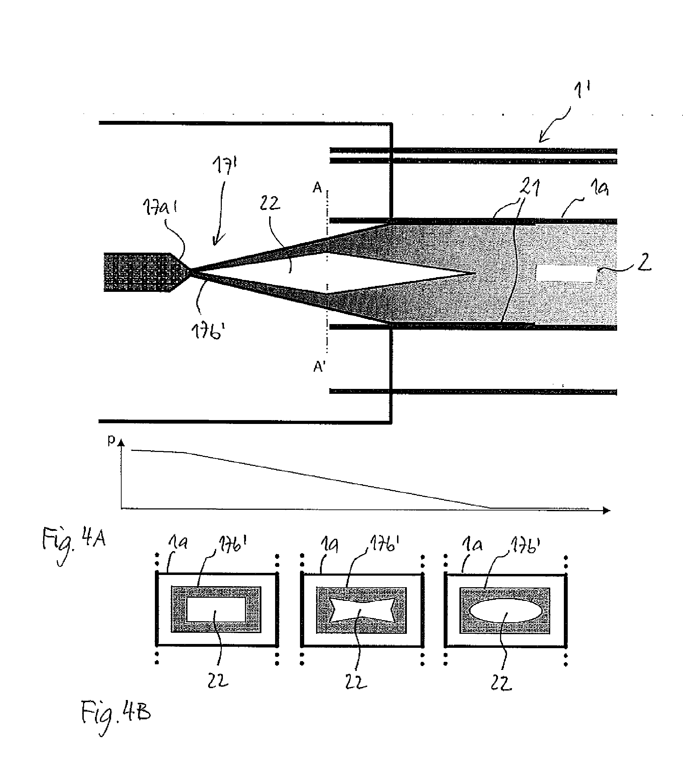

Fig. 4A und 4B zeigen eine ähnliche Düsenanordnung wie in Fig. 3A und 3B in Verbindung mit dem gleichen Kunststoffprofil 1'. Die wesentlichen Unterschiede bestehen darin, dass der Düsenkern 22 hier in seinen zentralen Abmessungen wesentlich kleiner dimensioniert ist und die Düse 17' (neben einem ersten Abschnitt konstanten Durchmessers, der nicht gesondert bezeichnet ist) einen Einschnürungsabschnitt 17a' mit einem sich anschließenden Aufweitungsabschnitt 17b' umfasst, wobei der schlanke Düsenkern 22 im letzteren sitzt. Im unteren Teil von Fig. 4A ist wiederum der Druckverlauf dargestellt, und Fig. 4B zeigt drei Beispiele von Querschnittsgeometrien der Düse 17' und des Düsenkerns 22 längs der Schnittebene A'. Der Querschnitt des Düsenkerns ist hier also entweder rechteckig oder schmetterlingsförmig oder elliptisch, womit sich unterschiedliche Effekte hinsichtlich der Füllung des Kunststoffprofils mit dem Dämmstoff erzielen lassen.

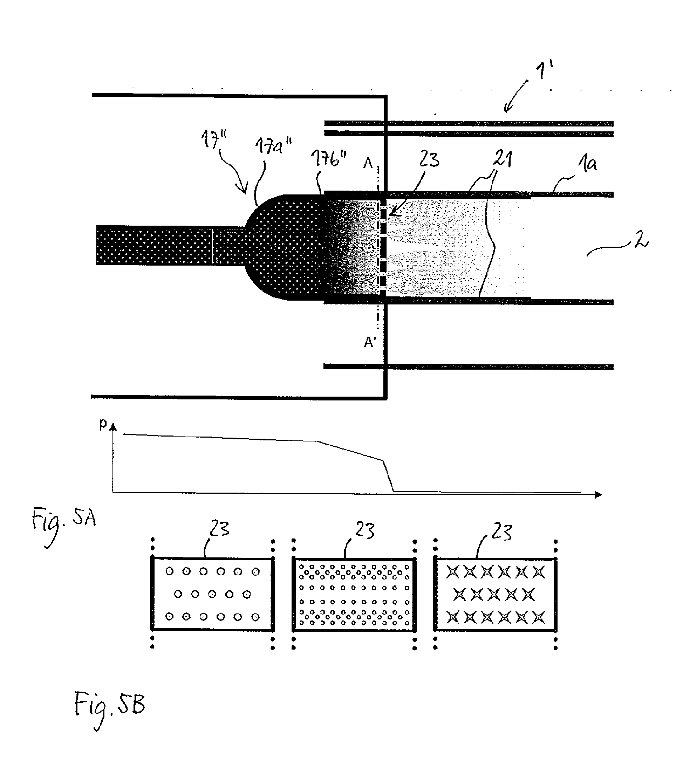

Fig. 5A und 5B zeigen als grundsätzliche andere Ausführung eine Düse 17" einer erfindungsgemäßen Kunststoff-Extrusionsvorrichtung, die den expandierenden Dämmstoff durch eine Lochblende (Strainer) 23 austrägt, wiederum in Verbindung mit dem Kunststoffprofil 1', das bereits in Fig. 3A und 4A gezeigt wurde. Die Düse 17" umfasst hier neben dem Zuführungs-Abschnitt mit konstantem Durchmesser einen annähernd halbkugeligen Aufweitungs-Abschnitt 17a", der in einen zylindrischen Abschnitt 17b" größeren Durchmessers übergeht. An dessen Ende und somit direkt am Ausgang der Düse 17" sitzt die Lochblende 23, für die in Fig. 5B drei verschiedene Realisierungen gezeigt sind. Die rechte Darstellung unterscheidet sich von beiden anderen darin, dass die Öffnungen der Lochblende im Querschnitt nicht kreisförmig, sondern sternförmig ausgeführt sind.

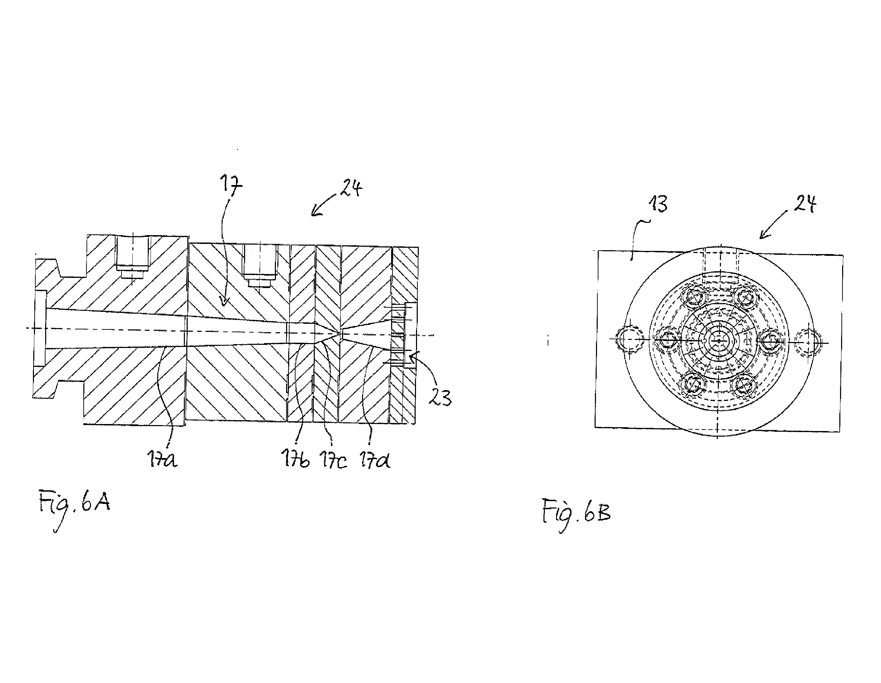

Fig. 6A und 6B zeigen einen speziellen Düsenaufbau der erfindungsgemäßen Kunststoff-Spritzvorrichtung, der in einem am Vorrichtungs-Ausgang einzusetzenden Zusatzteil 24 realisiert ist. In Fig. 6A ist zu erkennen, dass die Düsenanordnung einen ersten Düsenabschnitt 17a großer Länge hat, in dem sich der Düsenquerschnitt mit geringer Steigung kontinuierlich verkleinert, einen zweiten Düsenabschnitt 17b geringer Länge, in dem der Querschnitt konstant bleibt, einen dritten Düsenabschnitt 17c geringer Länge, in dem sich der Düsenquerschnitt mit großer Steigung verringert, einen vierten Düsenabschnitt 17d mittlerer Länge, in dem sich der Düsenquerschnitt mit mittlerer Steigung vergrößert, und einen fünften Düsenabschnitt 23 mit einer Vielzahl von Sprühöffnungen. Des Weiteren ist zu erkennen, dass zur Realisierung dieser Düsenabschnitte das Zusatzteil 24 in eine Mehrzahl einzelner (nicht gesondert bezeichneter) Platten unterteilt ist, wobei der erste Düsenabschnitt 17a durch zwei in Längsrichtung aneinandergefügte Platten bzw. Grundkörper realisiert wird. Durch diesen modularen Aufbau lassen sich relativ leicht Variationen der Düsengeometrie in bestimmten Abschnitten realisieren, ohne ein neues Zusatzteil 24 als Ganzes fertigen zu müssen.

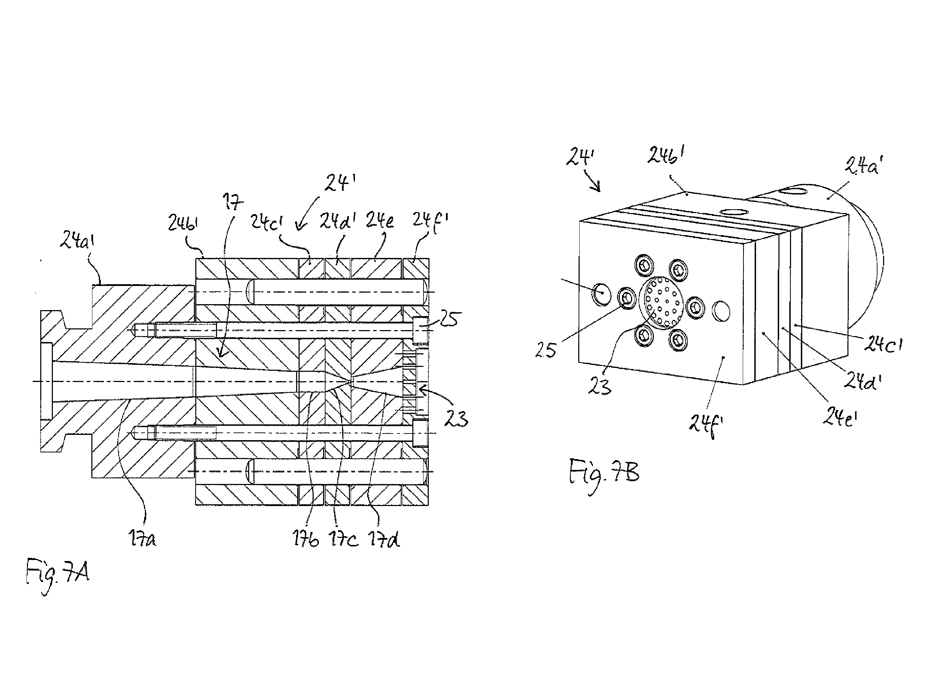

Fig. 7A und 7B zeigen ein gegenüber der vorstehend beschriebenen Ausführung modifiziertes Zusatzteil 24', welches zum Aufsetzen auf den Ausgang der Kunststoff-Extrusionsvorrichtung 13 konstruiert ist. Mit diesem Zusatzteil 24' wird im Prinzip die gleiche Geometrie der Düsenanordnung 17 wie in Fig. 6A realisiert, so dass die Düsenabschnitte mit den gleichen Bezugsziffern wie dort bezeichnet sind. In Fig. 7a und 7B sind die Module, aus denen das Zusatzteil 24' zusammengesetzt ist, mit den Ziffern 24a' bis 24f' bezeichnet, und es sind auch die Befestigungsbolzen 25 zur Befestigung der Module bezeichnet.

Ein Mittel zur Realisierung der Erfindung ist eine schäumbare Zusammensetzung, die mindestens ein Basispolymer, mindestens ein Treibmittel sowie mindestens ein Gleitmittel und/oder mindestens einen Hitzestabilisator umfasst. Der Gehalt an dem Basispolymer sollte dabei vorzugsweise mindestens 50 Gew.-% betragen. Weiterhin sollte das Basispolymer vorzugsweise so gewählt werden, dass es nicht mit dem Profilkunststoff kompatibel ist und während des Schäumens nicht mit diesem verklebt. Um eine ausreichende Schäumung zu gewährleisten hat sich ein Gehalt an Treibmittel im Bereich von 5 bis 20 Gew.-% als zweckmäßig erwiesen. Das Gleitmittel und/oder der Hitzestabilisator sind vorzugsweise in Mengen von 0,1 bis 5 Gew.-%, bezogen auf die schäumbare Zusammensetzung, in dieser enthalten. Mit einer solchen Zusammensetzung können Polymerschäume mit einer Wärmeleitfähigkeit von < 0,04 W/(mK), einer Expansion von ≥ 1000%, insbesondere ≥ 2000%, und/oder eine Schweißbarkeit von etwa 80 sec. bei 240 bis 260 °C.

Als Basispolymer der schäumbaren Zusammensetzung, die bei der vorliegenden Erfindung eingesetzt und spezielle zur Herstellung von Kernen von Kunststoffprofilen herangezogen werden kann, kann grundsätzlich jedes beliebige Material eingesetzt werden, das kontrolliert zum Schäumen gebracht werden kann und Verstärkungseigenschaften aufweist. Das Basispolymer sollte vorzugsweise mit dem Profilmaterial inkompatibel sein nicht auf diesem haften. Besonders bevorzugt haftet die in ein Profil eingebrachte schäumbare Zusammensetzung nicht auf PVC.

Bei dem Basispolymer handelt es sich jedoch vorzugsweise um ein organisches Polymer mit einem Schmelzpunkt im Bereich von 20 bis 400°C. Das Basispolymer sollte zweckmäßig bei einer Temperatur erweichen, welche unterhalb der Schäumungstemperatur liegt, und seine Verformung während des Schäumungsvorgangs ermöglicht wird. Ist die Schäumungstemperatur erreicht, wird das Basispolymer geschäumt. Besonders bevorzugt ist es, wenn das Basispolymer einen Schmelzpunkt im Bereich von 60 - 200 °C aufweist. Weiterhin sollte der Aushärtungsvorgang vorzugsweise erst einsetzen, wenn die Schäumungstemperatur überschritten und die Schäumung zumindest teilweise abgeschlossen ist.

Geeignete Basispolymere sind dem Fachmann ohne weiteres geläufig. Besonders bevorzugt ist das Basispolymer im Rahmen der vorliegenden Erfindung ausgewählt aus der Gruppe, umfassend EVA, Polyolefin, Polyvinylchlorid oder XPS (vernetztes Polystyrol). Bevorzugte Polyolefine sind auf Ethylen oder Propylen basierende Polymere, von denen Polyethylen, insbesondere in Form von LDPE (low density Polyethylen), besonders bevorzugt ist. Mischungen der genannten Polymere können ebenfalls im Rahmen der Erfindung als Basispolymer eingesetzt werden. Es ist anzumerken, dass bei der Verwendung von PVC-Schäumen mit PVC-Profilen reines PVC als Basismaterial für den Schaum weniger geeignet ist. Es hat sich jedoch herausgestellt, dass es möglich ist PVC mit anderen Polymeren, insbesondere mit einem Terpolymer aus Ethylen, n-Butylacrylat und Carbonmonoxid, so zu konfektionieren, dass die schäumbare Zusammensetzung nicht mit dem Profilmaterial verklebt. Derartige Mischungen sind daher im Rahmen der Erfindung zur Verwendung mit PVC-Profilen bevorzugt.

Das Basispolymer stellt in der Regel die Hauptkomponente der schäumbaren Zusammensetzung dar, wobei dessen Anteil an der Zusammensetzung vorzugsweise mindestens 50 Gew.-% beträgt. Besonders bevorzugt liegt der Gehalt an Basispolymer im Bereich von 65 bis 95 Gew.-%, insbesondere im Bereich von 70 bis 90 Gew.-% und am meisten bevorzugt im Bereich von 75 bis 85 Gew.%.

Die schäumbare Zusammensetzung kann thermisch oder durch elektromagnetische Strahlung geschäumt werden. Dazu enthält die schäumbare Zusammensetzung typischerweise ein chemisches oder physikalisches Treibmittel. Chemische Treibmittel sind organische oder anorganische Verbindungen, welche sich unter Einfluss von Temperatur, Feuchtigkeit oder elektromagnetischer Strahlung zersetzen, wobei mindestens eines der Zersetzungsprodukte ein Gas ist. Als physikalische Treibmittel können beispielsweise Verbindungen eingesetzt werden, welche bei erhöhter Temperatur in den gasförmigen Aggregatzustand übergehen. Dadurch sind sowohl chemische als auch physikalische Treibmittel in der Lage, Schaumstrukturen in Polymeren zu erzeugen.

Im Zusammenhang mit der vorliegenden Erfindung hat es sich als besonders zweckmäßig erwiesen, wenn die schäumbare Zusammensetzung thermisch schäumbar ist und bei einer Temperatur von kleiner gleich 250 °C, insbesondere von 100 °C bis 230°C, bevorzugt von 140 bis 200 °C geschäumt wird, wobei chemische Treibmittel eingesetzt werden. Als chemische Treibmittel haben sich insbesondere Azodicarbonamide, Sulphohydrazide, Hydrogencarbonate oder Carbonate als zweckmäßig erwiesen. Geeignete Sulfohydrazide sind p-Toluolsulfonylhydrazid, Benzolsulfonylhydrazid und das p,p'-Oxybisbenzolsulfonylhydrazid. Ein geeignetes Hydrogencarbonat ist Natriumhydrogencarbonat. Ein besonders bevorzugtes Treibmittel ist das p,p'-Oxybisbenzolsulfonylhydrazid. Geeignete Treibmittel sind auch kommerziell erhältlich unter den Handelsnamen Expancell^{®} von der Firma Akzo Nobel, Niederlande, unter dem Handelsnamen Cellogen^{®} von der Firma Chemtura Corp., USA oder unter dem Handelsnamen Unicell^{®} von der Firma Tramaco, Deutschland.

Die für die Schäumung erforderliche Wärme kann durch externe oder durch interne Wärmequellen, wie eine exotherme chemische Reaktion, zugeführt werden.

Hinsichtlich des Gehalts an Treibmittel unterliegt die vorliegende Erfindung keinen relevanten Beschränkungen. Es hat sich jedoch als zweckmäßig erwiesen, wenn das Treibmittel, in einem Gehalt von 5 bis 20 Gew.-%, insbesondere von 10 bis 18 Gew.-%, und besonders bevorzugt im Bereich von 12 bis 16 Gew.-%, bezogen auf die schäumbare Zusammensetzung, in dieser enthalten ist. In Fällen in denen eine geringere Expansion der Zusammensetzung erwünscht ist kann der Gehalt auch niedriger sein, insbesondere im Bereich von 5 bis 10 Gew.-%. Die schäumbare Zusammensetzung, aus der der Polymerschaum hergestellt werden kann, enthält, wie vorstehend beschrieben, ebenfalls mindestens ein Gleitmittel und/oder mindestens einen Hitzestabilisator. In einer bevorzugten Ausführungsform enthält die schäumbare Zusammensetzung eine Komponente, die zugleich die Eigenschaften eines Gleitmittels, als auch eines Hitzestabilisators aufweist. In diesem Fall kann auf den Zusatz einer weiteren Gleitmittel- oder Hitzestabilisatorkomponente verzichtet werden.

Als Hitzestabilisatoren, die der schäumbaren Zusammensetzung gleichzeitig eine Gleitmittelwirkung verleihen, haben sich insbesondere Fettsäureamide, Fettsäuren und Fettsäurealkoholester als besonders geeignet erwiesen, deren lange aliphatische Kohlenstoffketten den gewünschten Effekt eines Gleitmittels vermitteln. Gleichzeitig fungieren diese Verbindungen als Hitzestabilisator. Als besonders zweckmäßig hat sich die Verwendung von Fettsäureamiden, Fettsäuren und Fettsäurealkoholester herausgestellt, die eine Kettenlänge des auf die Fettsäure, bzw. den Fettsäurealkohol zurückgehenden Anteils im Bereich von 6 bis 24, bevorzugt 8 bis 16, und insbesondere 10 bis 14 Kohlenstoffatomen aufweisen.

Im Rahmen der Erfindung haben sich Hitzestabilisatoren, die neben einer linearen aliphatischen Kette eine Thioetherfunktion aufweisen, als besonders geeignet erwiesen. Am meisten bevorzugt als Hitzestabilisatoren sind Fettsäurealkoholdiester in denen eine Thioetherfunktion im Säureanteil vorliegt, insbesondere das Didodecyl 3,3'-thiodipropionat.

Der Hitzestabilisator sollte in der Zusammensetzung mindestens in einer Menge enthalten sein, bei dem eine signifikante Stabilisierung der Zusammensetzung nach dem Schäumen zu beobachten ist, d.h. dass der Schaum auch bei längerer Exposition (10 Minuten oder mehr) bei hohen Temperaturen (150 °C oder mehr) keiner signifikanten Volumenverminderung (10% oder mehr) unterliegt. Insbesondere hat sich im Rahmen der vorliegenden Erfindung ein Gehalt des Hitzestabilisators und/oder des Gleitmittels im Bereich von 0,1 bis 5 Gew.-%, und bevorzugt im Bereich von 0,5 bis 3 Gew.-%, bezogen auf die gesamte schäumbare Zusammensetzung, als geeignet erwiesen. Bei Gehalten von weniger als 0,1 Gew.-% ist die Menge des Hitzestabilisators nicht ausreichend um den Schaum hinlänglich zu stabilisieren, während bei Gehalten von mehr als 5 Gew.-% bei längerer Exposition des Schaum gegenüber hohen Temperaturen ebenfalls eine signifikante Abnahme des Schaumvolumens zu beobachten ist.

Weiterhin hat es sich als zweckmäßig erwiesen, wenn die schäumbare Zusammensetzung während der Schaumbildung stabilisiert und gefestigt wird. Dies kann durch den Zusatz von Vernetzungsmitteln gewährleistet werden, die vorzugsweise durch Abbauprodukte des Treibmittels aktiviert werden und eine Vernetzung des entstehenden Schaums auslösen. Dabei soll die Aushärtung der schäumbaren Zusammensetzung erst bei einer Temperatur einsetzen, welche gleich oder über dessen Schäumungstemperatur liegt, da ansonsten die Aushärtung der schäumbaren Zusammensetzung vor dessen Aushärtung erfolgt und dadurch nicht gewährleistet werden könnte, dass die schäumbare Zusammensetzung vor der Aushärtung den gesamten Hohlraum des Kunststoffprofils ausgefüllt hat und dass der Schaum eine kompakte Struktur aufweist.

Hinsichtlich der Vernetzung des erhaltenen Polymerschaums unterliegt die vorliegende Erfindung ebenfalls keinen relevanten Beschränkungen. Eine Vernetzung des Schaums ist insbesondere mit Hilfe von Vernetzungsmitteln möglich, die nicht mit dem Basispolymer reagieren, wie beispielsweise Epoxybasierende Vernetzungsmittel, oder mit Hilfe von vernetzten, die mit dem Basispolymer reagieren. Ein Beispiel für solche Vernetzungsmittel sind Peroxid-Vernetzungsmittel. Im Rahmen der vorliegenden Erfindung ist eine Vernetzung mit Peroxid-Vernetzungsmitteln oder eine Vernetzung mit Epoxiden bevorzugt.

Bei der Vernetzung mit Peroxiden kann auf konventionelle organische Peroxide wie beispielsweise Dibenzoyl Peroxid, Dicumyl Peroxid, 2,5-Di-(t-butylperoxyl)-2,5-dimethylhexan, t-Butyl Cumyl Peroxid, a, a'-Bis(t-butylperoxy)diisopropylbenzene Isomermischung, Di-(t-amyl) Peroxid, Di-(t-butyl) Peroxide, 2,5-Di-(t-butylperoxy)-2,5-dimethyl-3-hexin, 1,1-Di(t-butylperoxy)-3,3,5-trimethylcyclohexan, n-Butyl 4,4-Di-(t-butylperoxy)valerate, Ethyl 3,3-Di-(t-amylperoxy)butanoate, oder t-Butyl Peroxy-3,5,5-trimethylhexanoate. Ein bevorzugtes Peroxid ist das Dicumylperoxid.

Beim Einsatz von Epoxy-basierenden Vernetzungsmitteln hat sich eine Mischung eines Epoxy-haltigen Polymers und eines Maleinsäureanhydridgruppenenthaltenden Polymers als besonders zweckmäßig erwiesen. Bevorzugt handelt es sich bei dem Epoxy-haltigen Polymer um ein Copolymer aus Ethylen und Glycidylmethacrylat mit einem Gehalt an Glycidylmonomer im Bereich von 4 bis 12 Gew.-%. Das Maleinsäureanhydridgruppen enthaltende Polymer besteht vorzugsweise aus einem Terpolmer aus Ethylen, einem Acrylsäurealkylester, insbesondere auf Basis eines Alkylalkohols mit 2 bis 10 Kohlenstoffatomen, und Maleinsäureanhydrid. Der Gehalt an Maleinsäureanhydrid im Terpolymer liegt vorzugsweise im Bereich von 1,5 bis 5 %. Besonders bevorzugt ist es, wenn diese beiden Vernetzungsmittelkomponenten in einem Verhältnis von 2:1 bis 1:2, insbesondere etwa 1:1 vorliegen.

Diese Polymerkombination erweist sich insbesondere in Kombination mit Treibmitteln, bei deren Erhitzen Wasser oder Alkohol freigesetzt wird, als besonders zweckmäßig, da durch das entstehende Wasser bzw. die Alkohole die Maleinsäureanhydridgruppen zu Maleinsäure hydrolysiert werden können, die wiederum eine Reaktion mit den Epoxygruppen des Epoxy-haltigen Polymers eingehen und eine Vernetzung bewirken.
In der schäumbaren Zusammensetzung ist das Vernetzungsmittel vorzugsweise mit einem Gehalt von 1 bis 25 Gew.-%, insbesondere im Bereich von 2 bis 18 Gew.-% und besonders bevorzugt im Bereich von 2 bis 10 Gew.-%, bezogen auf die Gesamte schäumbare Zusammensetzung, enthalten. Wird als Vernetzungsmittel ein Peroxid einbezogen, so kann dessen Konzentration jedoch auch niedriger liegen, insbesondere im Bereich von 1 bis 5 Gew.-%, und besonders bevorzugt im Bereich von 1 bis 2 Gew.-%.

In einer weiteren bevorzugten Ausführungsform ist die schäumbare Zusammensetzung frei von Vernetzungsmitteln.

Weiterhin hat es sich als vorteilhaft herausgestellt, wenn in die schäumbare Zusammensetzung zusätzlich mindestens einen Wärmereflektor, mindestens ein Wärmeverlustadditiv, mindestens ein Antikondensationsadditiv, mindestens ein Antioxidanz, Harnstoff und/oder mindestens einen Füllstoffe eingezogen werden. Zweckmäßige Wärmereflektoren stellen Graphit, Ruß und/oder Titandioxid dar. Zweckmäßig in den Polymerschaum einzubeziehender Füllstoffe sind Calciumcarbonat oder Talk, das in mit einem Gehalt von 0,5 bis 8 Gew.-%, insbesondere 1 bis 5 Gew.-%, und besonders bevorzugt in einer Menge von etwa 2 Gew.-%, in der Polymerschaum enthalten sein kann. Füllstoffe können beispielsweise als Nukleierungsmittel zugesetzt werden um die Schäumung zu verbessern. Geeignete Antioxidantien sind beispielsweise sterisch gehinderte Phenole.

Die Ausführung der Erfindung ist nicht auf die oben erläuterten Beispiele und Aspekte beschränkt, sondern ebenso in einer Vielzahl von Abwandlungen möglich, die im Rahmen fachmännischen Handelns liegen.

## Patentansprüche

1. Verfahren zur Herstellung eines mit Dämmstoff ausgeschäumten Hohlkörpers oder Hohlraums, wobei ein expandierbares Ausgangsmaterial des Dämmstoffs einer Kunststoff-Extrusionsvorrichtung zugeführt, in dieser unter Druck aktiviert und beim Austrag aus dieser in den Hohlkörper oder den Hohlraum mit derart hohem Volumenausdehnungsgradienten expandiert wird, dass der durch die Expansion gebildete Dämmstoff den Querschnitt des Hohlkörpers oder Hohlraums beim Eintritt unverzögert vollständig ausfüllt.

2. Verfahren nach Anspruch 1, wobei der Kunststoff-Extrusionsvorrichtung in Art eines Extruders oder einer Spritzgießmaschine festes Ausgangsmaterial in Granulatform zugeführt wird.

3. Verfahren nach Anspruch 1 oder 2, wobei der Hohlkörper ein aus einem Kunststoffmaterial extrudiertes Profil ist und der Dämmstoff in einem Koextrusionsprozess zugleich mit der Bildung des Kunststoffprofils in dieses eingebracht wird.

4. Verfahren nach einem der vorangehenden Ansprüche, wobei der Hohlkörper ein Tür- oder Fensterrahmenprofil ist.

5. Verfahren nach einem vorangehenden Ansprüche, wobei eine Kunststoff-Extrusionsvorrichtung mit mindestens einer Förderschnecke eingesetzt wird und die Kunststoff-Extrusionsvorrichtung derart konfiguriert ist so wie die mechanischen Eigenschaften des Ausgangsmaterials derart vorbestimmt sind, dass Scherkräfte auftreten, die zu einer thermischen Aktivierung des Ausgangsmaterial mindestens beitragen.

6. Verfahren nach einem der vorangehenden Ansprüche, wobei eine Kunststoff-Extrusionsvorrichtung mit einer Heizeinrichtung eingesetzt und die Heizeinrichtung derart betrieben wird, dass sie zu einer thermischen Aktivierung des Ausgangsmaterials mindestens beiträgt.

7. Verfahren nach einem der vorangehenden Ansprüche, wobei der Expansionsvorgang des Ausgangsmaterials beim Austrag aus der Kunststoff-Extrusionsvorrichtung durch eine spezielle Düsengeometrie, insbesondere in einem ausgangsseitig angefügten Zusatzteil der Kunststoff-Extrusionsvorrichtung, gesteuert wird.

8. Verfahren nach Anspruch 7, wobei durch die Düsengeometrie zunächst eine graduelle Querschnittsverringerung mit kleinem Gradienten über eine große Länge, dann ein Konstanthalten des Querschnitts über eine kleine Länge, dann eine graduelle Querschnittsverringerung mit großem Gradienten über eine kleine Länge, anschließend eine graduelle Querschnittsvergrößerung mit mittlerem Gradienten über eine mittlere Länge und schließlich ein Austritt durch einen Sprühkopf mit einer Mehrzahl von Sprühöffnungen realisiert wird.

9. Kunststoff-Extrusionsvorrichtung zur Durchführung des Verfahrens nach einem der vorangehenden Ansprüche, mit mindestens einer Förderschnecke, deren Schneckengeometrie in Abstimmung auf den Schneckenzylinder zur Erzeugung hoher Scherkräfte in einem gefördertem Ausgangsmaterial eines Dämmstoffes konfiguriert ist, und/oder einer Heizeinrichtung zur Erwärmung des Ausgangsmaterials

10. Kunststoff-Extrusionsvorrichtung nach Anspruch 9, mit einer ausgangsseitigen Düsenanordnung, die zur Expansion eines vor-aktivierten Ausgangsmaterials mit hohem Volumenausdehnungsgradienten ausgebildet ist.

11. Kunststoff-Extrusionsvorrichtung nach Anspruch 10, wobei die Düsenanordnung einen ersten Düsenabschnitt großer Länge hat, in dem sich der Düsenquerschnitt mit geringer Steigung kontinuierlich verkleinert, einen zweiten Düsenabschnitt geringer Länge, in dem der Querschnitt konstant bleibt, einen dritten Düsenabschnitt geringer Länge, in dem sich der Düsenquerschnitt mit großer Steigung verringert, einen vierten Düsenabschnitt mittlerer Länge, in dem sich der Düsenquerschnitt mit mittlerer Steigung vergrößert, und einen fünften Düsenabschnitt mit einer Vielzahl von Sprühöffnungen.

12. Kunststoff-Extrusionsvorrichtung nach einem der Ansprüche 9 bis 11, ausgebildet als Einschnecken-Extruder oder Einschnecken-Spritzgießmaschine.

13. Kunststoff-Extrusionsvorrichtung nach einem der Ansprüche 10 bis 12, wobei die Düsenanordnung in einem ausgangsseitig aufsetzbaren Zusatzteil ausgebildet ist.
